# FASCICULE DE BREVET EUROPEEN

(11) **EP 0 497 069 B1**
(45) Date de publication et mention de la délivrance du brevet: **12.02.1997**
(21) Numéro de dépôt: 91403425.1
(22) Date de dépôt: 17.12.1991
(51) Int. Cl.: G11B 5/39

(54) **Procédé de fabrication de capteurs magnéto-résistifs, et dispositif magnétique réalisé suivant un tel procédé**
Herstellungsverfahren von magnetoresistiven Sensoren und nach diesem Verfahren hergestellte magnetische Vorrichtung
Magnetoresistive sensor fabrication method and magnetic device produced according to such a method

(30) Priorité: 27.12.1990 FR 9016334
(43) Date de publication de la demande: 05.08.1992
(73) Titulaire: THOMSON-CSF, 75008 Paris (FR)
(72) Inventeur: Pirot, François-Xavier, F-92045 Paris la Défense (FR); Coutellier, Jean-Marc, F-92045 Paris la Défense (FR); Valet, Thierry, F-92045 Paris la Défense (FR)
(74) Mandataire: Guérin, Michel

(56) Documents cités:
- EP-A- 0 233 086
- FR-A- 2 272 460
- IBM TECHNICAL DISCLOSURE BULLETIN, vol. 21, no. 12, mai 1979, page 5002, Armonk, NY, US; K.E. PETERSEN: "Thin film magnetic heads"
- IBM TECHNICAL DISCLOSURE BULLETIN, vol. 32, no. 4B, septembre 1989, pages 51- 53, Armonk, NY, US; "Magnetoresitive magnetic recording sensor"

## Description

L'invention concerne un procédé de fabrication de capteurs magnéto-résistifs et un dispositif réalisé suivant un tel procédé. Le procédé de l'invention permet notamment de faciliter une fabrication collective de tels capteurs.

Des structures utilisant des effets magnéto-résistifs sont mises en oeuvre dans différents domaines, notamment dans celui de l'enregistrement magnétique, pour détecter un champ magnétique, inscrit sur un support tel que par exemple une bande ou un disque magnétique. Ces capteurs magnéto-résistifs permettent de s'affranchir des limitations attachées aux méthodes inductives, notamment l'exigence d'une vitesse de défilement relativement élevée de la bande magnétique par rapport à la tête de lecture magnétique.

Dans les capteurs magnéto-résistifs, on utilise le phénomène suivant lequel la valeur de la résistance ohmique de certains matériaux varie en fonction de la magnétisation qui y règne. Cette variation de résistance est détectée à l'aide de méthode usuelles, par exemple, en détectant, ou mesurant les variations d'intensité d'un courant électrique.

Les capteurs magnéto-résistifs comprennent un élément magnéto-résistif proprement dit, traversé par le courant électrique de mesure. Les éléments magnéto-résistifs sont réalisés de telle manière que le champs magnétique à mesurer soit perpendiculaire à l'axe d'aimantation facile du matériau, et que le courant passe parallèlement à cet axe.

Il peut être avantageux d'ajouter un champ magnétique constant dit "de polarisation", qui fait tourner l'aimantation par rapport à l'axe facile, afin que la variation de résistance soit d'une part maximum, et d'autre part linéaire en fonction de faibles variations de champ. Cette "polarisation" peut être apportée de diverses manières bien connues par exemple à l'aide d'une couche de fort champ coercitif ; ou bien à l'aide d'un courant dans un conducteur proche du capteur ; soit encore avec une couche antiferromagnétique magnétiquement couplée à la résistance sensible.

D'autres aménagements peuvent encore être apportés, notamment dans le cadre de l'enregistrement magnétique où une très grande résolution spatiale est recherchée, aménagements qui consistent par exemple à réaliser des couches de blindage de part et d'autre de l'élément magnéto-résistif.

Les éléments magnéto-résistifs sont couramment réalisés dans des alliages tels que par exemple le Permalloy (Fe ₈₀ Ni ₂₀). On peut trouver des explications détaillées sur l'effet magnéto-résistif et la réalisation de capteur magnéto-résistifs dans l'article de D. THOMPSON paru dans IEEE Transaction On Magnetics, vol. 11, N°4, 1975, page 1039.

Les différentes formes de réalisation ci-dessus mentionnées sont toutes plus ou moins compatibles avec des méthodes de fabrication collectives. Ces méthodes mettent en oeuvre notamment des technologies de films en couches minces et des techniques de microlithographie, sur un substrat commun à un grand nombre de capteurs magnéto-résistifs. On peut ainsi réduire fortement les coûts, aussi bien pour les capteurs magnéto-résistifs "individuels" destinés à fonctionner de manière individuelle après avoir été séparés des autres capteurs, que pour les capteurs destinés à être associés en fonctionnement et par exemple à former les têtes magnétiques élémentaires d'une tête de lecture multipistes.

Généralement les différentes étapes de fabrication sont communes à tous les capteurs formés sur un même substrat, jusqu'à une étape de polissage. Le polissage a pour but notamment de définir de manière précise, une dimension (longueur ou largeur) des éléments magnéto-résistifs. Dans le cas par exemple où l'on réalise sur un même substrat des capteurs arrangés en lignes et en colonnes, il est nécessaire de découper le substrat en barrette (suivant les lignes ou les colonnes) et de polir la tranche des barrettes pour définir les bords de tous les éléments magnéto-résistifs portés par la barrette. Dans le cas des têtes magnétiques de lecture, c'est le bord ainsi poli des éléments magnéto-résistifs qui est orienté vers le support magnétique à lire.

Cette opération de polissage, ainsi effectuée barrette par barrette, constitue une opération longue, délicate et donc coûteuse.

En outre, dans le cas d'un arrangement matriciel de capteurs magnéto-résistifs (pour tête de lecture multipistes par exemple), il est nécessaire d'ajouter une opération d'assemblage des différentes barrettes après polissage, alors que les techniques de microlithographie permettent de réaliser les lignes et les colonnes de capteurs directement aux pas désirés.

La présente invention a pour objet un procédé de fabrication d'une pluralité de capteurs magnéto-résistifs disposés en plusieurs rangées sur un même substrat. Le procédé de l'invention permet une réalisation collective de ces capteurs, y compris dans la phase de polissage.

Ceci est obtenu en réalisant les éléments magnéto-résistifs dans des plans non parallèles au substrat, de telle sorte que les éléments magnéto-résistifs ont tous un bord orienté vers l'extérieur du substrat, et que ce bord est rendu accessible au polissage quelle que soit sa position sur le substrat.

Selon l'invention, on propose un procédé de fabrication d'une pluralité de capteurs magnéto-résistifs, consistant à déposer sur une face d'un substrat au moins une couche d'un matériau magnéto-résistif, puis à réaliser dans cette couche de matériau magnéto-résistif une pluralité d'éléments magnéto-résistifs correspondant chacun à un capteur, caractérisé en ce qu'avant le dépôt de la couche de matériau magnéto-résistif, et à l'emplacement de chaque capteur, il consiste à réaliser dans ladite face du substrat une zone de surface inclinée par rapport au plan général de ladite face du substrat, afin que chaque élément magnéto-rés istif soit formé au moins partiellement sur une telle surface inclinée et présente un bord orienté vers l'extérieur du substrat, en ce que pour chaque capteur on réalise au moins une cale d'épaisseur, la cale d'épaisseur étant formée à proximité de la zone de surface inclinée de manière à affleurer un niveau à atteindre dans une phase de polissage, afin de réduire la vitesse à laquelle s'effectue le polissage quand ce niveau est atteint, et en ce qu'une opération de polissage, permettant d'ajuster la longueur des éléments magnéto-résisitifs, est effectuée dans un plan parallèle à la dite face du substrat pour tous les éléments magnéto-résistifs formés sur le substrat.

L'invention concerne aussi un dispositif magnétique réalisé à l'aide d'un tel procédé.

On notera qu'on connaît, par l'article IBM Technical Disclosure Bulletin vol. 21 N°12, mai 1979, page 1002, K.E. PETERSEN, "Thin film magnetic Head", une tête magnétique (non magnétorésistive et individuelle), formée par dépôt de couches sur un flanc oblique creusé dans un substrat et par polissage superficiel du substrat. On connaît également, par l'article IBM Technical Disclosure Bulletin vol. 32 N°4B, Septembre 1989, page 51, "Magnetoresistive magnetic recording sensor", une technologie de perçage du substrat avec flancs obliques, dépôt de couches magnétiques sur les flancs et polissage par la face arrière, pour des têtes magnétorésistives individuelles. Toutefois, aucun de ces documents ne divulgue de cale d'épaisseur telle que dans l'invention.

L'invention sera mieux comprise à la lecture de la description qui suit, faite à titre d'exemple non limitatif en référence aux dessins annexés, parmi lesquels :
- la figure 1 représente de façon schématique, un dispositif magnétique d'un type convenant à être fabriqué par le procédé de l'invention ;
- la figure 2, illustre quelques étapes du procédé de l'invention ;
- la figure 3 est une vue de dessus d'un capteur magnéto-résistif montré à la figure 2, avant une étape de polissage ;
- la figure 4 est une vue du capteur de la figure 3, après l'étape de polissage ;
- la figure 5 est un schéma qui illustre une méthode d'adressage matriciel.

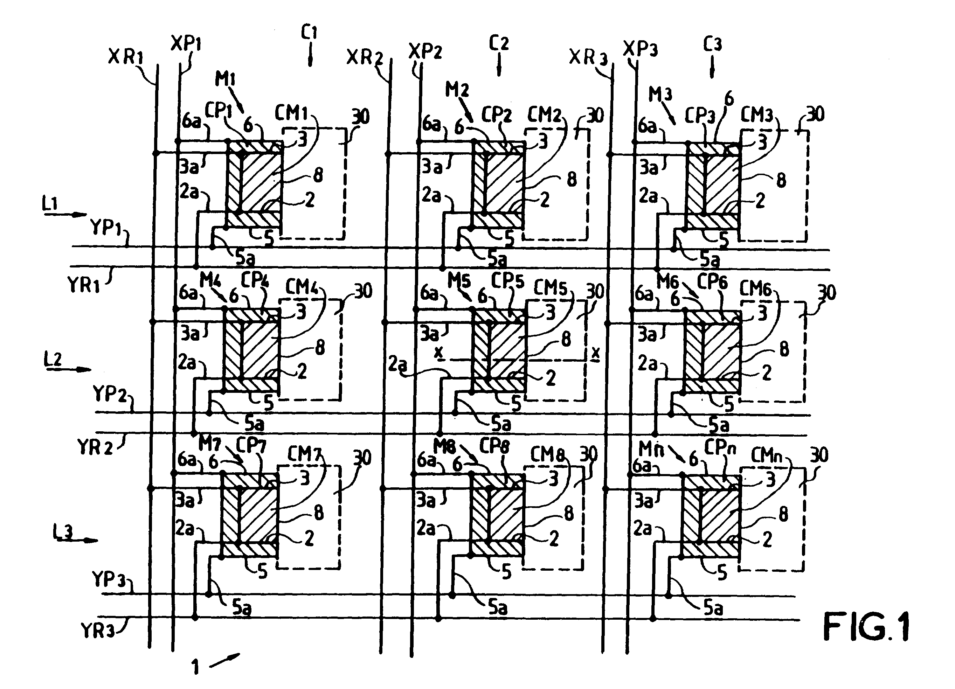

La figure 1 montre de façon schématique par une vue de dessus, un ensemble mangnétique 1 susceptible d'être réalisé par le procédé de l'invention. L'ensemble magnétique 1 comporte une pluralité de capteurs magnéto-résistifs M1 à Mn portés par un même substrat (non représenté sur la figure 1). Dans l'exemple non limitatif décrit, les capteurs M1 à Mn forment un arrangement matriciel, par exemple pour constituer les têtes de lecture élémentaires d'une tête magnétique 1 de lecture multipistes. Chaque capteur M1 à Mn peut cependant être destiné à constituer un capteur indépendant par séparation des autres capteurs, après la réalisation collective de ces capteurs sur un même substrat.

Dans l'exemple montré à titre non limitatif sur la figure 1, les capteurs sont au nombre de 9 disposés suivant trois lignes L1 à L3 et trois colonnes C1 à C3, mais bien entendu le nombre N de ces lignes et le nombre m de ces colonnes peuvent être différents, N et m pouvant chacun être égal ou supérieur à 1.

Dans l'exemple non limitatif décrit, les capteurs M1 à Mn sont du type comportant un champ magnétique de polarisation obtenu à l'aide d'un courant circulant dans une couche dite couche de polarisation. En conséquence chaque capteur M1 à Mn comporte une couche magnéto-résistive CM1 à CMn et une couche de polarisation CP1 à CPn (partiellement masquée) qui, dans la vue de la figure 1, est située par exemple dans un plan plus profond que la couche magnéto-résistive.

Les couches magnéto-résistives CM1 à CMn et les couches de polarisation CP1 à CPn sont électriquement reliées à des conducteurs par lesquels elles sont alimentées en courant d'une part une première extrémité 2 de chaque couches magnéto-résistive CM1 à CMn est reliée à un conducteur appelé conducteur ligne principal YR1 à YR3 disposé parallèlement aux lignes L1 à L3, et d'autre part l'autre extrémité 3 de cette couche est reliée à un conducteur appelé conducteur colonne principal XR1 à XR3 disposé parallèlement aux colonnes C1 à C3 ; ceci permet d'établir un courant dit courant de mesure dans les couches magnéto-résistives. Pour les couches de polarisation CP1 à CPn, chacune de ces couches est reliée par une première extrémité 5 à un conducteur appelé conducteur ligne de polarisation YP1 à YP3 disposé parallèlement aux lignes L1 à L3, et par l'autre extrémité 6 à un conducteur appelé conducteur colonne de polarisation XP1 à XP3, disposé parallèlement aux colonnes C1 à C3. Ceci permet d'établir un courant dit courant de polarisation dans les couches de polarisation.

Bien entendu une telle disposition de conducteurs servant à l'alimentation des capteurs s'applique particulièrement au cas où les capteurs M1 à Mn constituent un unique ensemble tel qu'une tête de lecture 1 multipistes. Dans le cas où les capteurs M1 à Mn sont destinés à être indépendants, il suffit par exemple de prévoir des conducteurs de liaison 2a, 3a et 5a, 6a pour les connexions électriques de chacune des couches.

Le procédé de l'invention se prête particulièrement bien à être mis en oeuvre à l'aide de techniques classiques de microlithographie, qui sont déjà largement appliquées dans le domaine des têtes magnétiques du type multipistes. Il permet de réaliser les capteurs M1 à Mn par une suite d'opérations qui peuvent s'appliquer simultanément à la réalisation de chaque capteur, y compris la phase de polissage.

Dans l'art antérieur, la phase de polissage exige de diviser l'ensemble 1 en barrettes, suivant le sens des lignes ou des colonnes L1 à L3, C1 à C3, pour accéder à un bord de la couche magnéto-résistive. Dans l'exemple non limitatif représenté à la figure 1, le bord 8 à polir des couches magnéto-résistives CM1 à CMn est parallèle aux colonnes C1 à C3, et le découpage en barrettes devrait s'exécuter suivant le sens des colonnes pour permettre l'opération de polissage si la fabrication des capteurs était effectuée suivant l'art antérieur.

Avec le procédé de l'invention, l'étape de polissage peut être elle aussi réalisée sur l'ensemble des capteurs M1 à Mn, sans découpe préalable du substrat qui porte ces capteurs.

A cette fin, suivant une caractéristique de l'invention, on réalise les couches magnéto-résistives CM1 à CMn et les couches de polarisations CP1 à CPn de chaque capteur M1 à Mn, au moins partiellement sur des zones dont la surface est inclinée par rapport au plan général de la face du substrat qui porte ces couches. Il en résulte qu'un bord de ces couches CM1 à CMn et CP1 à CPn est orienté vers l'extérieur du substrat, et se trouve ainsi accessible à un polissage qui peut s'exercer simultanément pour tous les capteurs, parallèlement à la face du substrat.

Les zones de surface inclinée peuvent être réalisées dans le substrat ou plus précisément sur la face de ce dernier, de différentes manières : par exemple à l'aide de méthodes dites additives (c'est-à-dire par apport de matière), telles que par exemple l'épitaxie (notamment quand le substrat est du type monocristallin) ou toute autre méthode, par exemple méthode de dépôt de couche sur un substrat monocristallin ou non ; ou à l'aide de méthodes dites soustractives, par exemple par photogravure.

Suivant une autre caractéristique de l'invention, cette photogravure consiste en une gravure anisotrope révélant les plans cristallins d'un substrat monocristallin, tel que par exemple en silicium, ou en quartz, ou encore en arséniure de gallium, etc . . .

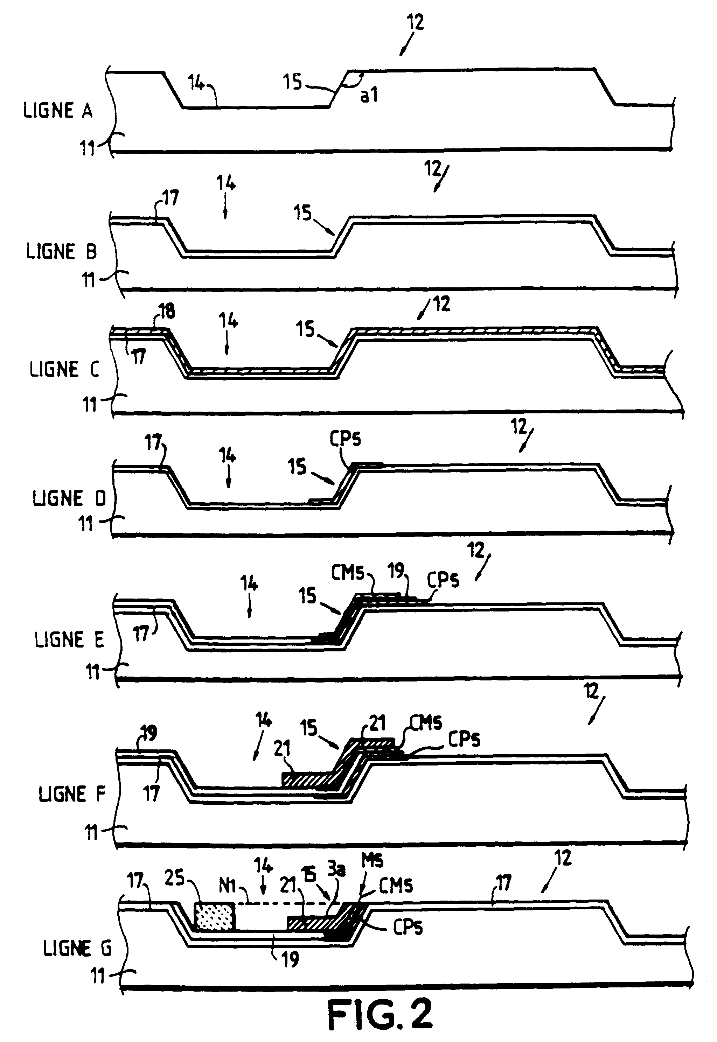

La figure 2, lignes A à G illustre différentes étapes du procédé de l'invention dans une version avec gravure d'un substrat 11, en silicium monocristallin par exemple. Les lignes A à G sont des vues en coupe d'un capteur magnéto-résistif (le cinquième capteur M5 par exemple) le long d'un axe x-x montré à la figure 1 au niveau de ce cinquième capteur M5.

La ligne A montre le substrat 11 après une opération de gravure anisotrope réalisée dans la face 12 du substrat.

Cette gravure détermine dans la face 12 une zone en creux 14 ayant par exemple une profondeur de l'ordre de 0,1 micromètre à 50 micromètres. Le creux 14 rejoint la face 12 par une zone 15 dont la surface est inclinée par rapport à la face 12. La pente de cette zone inclinée 15 est définie notamment par la structure cristalline du substrat 11, ce qui présente l'avantage notamment d'obtenir une surface très plane et un angle très reproductible, à l'aide d'une méthode simple. Cependant la gravure peut s'effectuer suivant d'autres méthodes en elle-même classiques, qui ne font pas intervenir la structure cristalline.

L'angle a1 formé entre la face 12 et la zone inclinée 15 n'est pas critique, par exemple une valeur de cet angle facile à obtenir avec un substrat en silicium monocristallin d'orientation <100>, est de l'ordre de 54,74° ; valeur qui est favorable au polissage ultérieur.

Bien entendu, une telle gravure est réalisée sur le substrat 11 à l'emplacement prévu pour chaque capteur M1 à Mn.

La ligne B représente une étape suivante dans laquelle la face 12 gravée du substrat est recouverte d'un dépôt 17 d'isolant, obtenu par exemple par une oxydation du silicium.

La ligne C montre qu'ensuite une couche 18 d'un matériau électriquement conducteur a été déposée, du cuivre par exemple avec une épaisseur par exemple de l'ordre de 0,5 micromètre à 50 micromètres.

La ligne D montre que la couche 18 a été gravée (par photolithogravure), pour constituer une couche de polarisation CP5 couvrant la zone inclinée 15 et débordant de celle-ci dans le creux 14 et sur la face 12.

La ligne E montre une étape dans laquelle la couche de polarisation CP5 est couverte par une couche magnéto-résistive CM5 dont elle est séparée par une seconde couche isolante 19. La seconde couche isolante 19 est une couche de SiO₂ par exemple, déposée sur la couche de polarisation CP5. La couche magnéto-résistive CM5 déposée sur la seconde couche isolante 19 est par exemple du permalloy (magnéto-résistif) ayant une épaisseur de l'ordre de 0,5 micromètre à 1 micromètre. Après photolitogravure, d'un côté la couche magnéto-résistive CM5 dépasse par rapport à la face 12 du substrat, et de l'autre côté elle se situe dans le creux 14 sans recouvrir entièrement la couche de polarisation CP5, afin de laisser l'accès aux extrémités de cette dernière pour y connecter les conducteur de liaison 5a, 6a montrés à la figure 1.

La ligne F illustre la réalisation des conducteurs de liaison 2a, 3a et 5a,6a (montrés figure 1) à l'aide d'une couche conductrice 21, en cuivre par exemple, qui est déposée sur le substrat 11 par dessus la couche magnéto-résistive. Après photolithogravure, la couche conductrice 21 subsiste seulement à l'emplacement des conducteurs de liaison ; en fait sur la figure de la ligne F elle représente par exemple une liaison de connexion 3a de la couche magnéto-résistive CM5, connexion qui est située dans un plan plus profond que celui de la figure.

La ligne G représente le capteur magnéto-résistif M5 obtenu après une opération de polissage effectuée sur tout le substrat 11, c'est-à-dire simultanément sur tous les capteurs ainsi réalisés. Cette opération a conduit à oter de la matière parallèlement à la face 12 du substrat, jusqu'à un niveau N1 approprié à conférer la dimension désirée à la couche magnéto-résistive CM5. La tranche (c'est-à-dire le bord 8) de la couche magnéto-résistive CM5 est alors affleurante à la surface du substrat 11, ou plus précisément affleurante à la couche isolante 17 dont l'épaisseur dans l'exemple non limitatif montré ligne G, a été réduite par le polissage. Cette surface couverte par la couche isolante 17 et qui est au niveau N1 à atteindre par polissage, constitue une surface haute 30 qui peut par exemple séparer deux capteurs consécutifs ; ces surfaces hautes 30 sont montrées en traits pointillés sur la figure 1. Ceci permet d'établir en fonctionnement une distance très faible avec le support magnétique, et donc de maximiser le signal reçu de ce support magnétique (non représenté).

L'étape de polissage peut être facilitée en réalisant des cales d'épaisseur 25 dont le sommet est au niveau N1 à atteindre par polissage. Dans l'exemple non limitatif, ces cales 25 sont réalisées dans le creux 14, par exemple par dépôt, puis photolithogravure d'une couche résistant beaucoup plus longtemps au polissage que la couche magnéto-résistive CM5 de manière par exemple à réduire fortement la vitesse de polissage quand le niveau NI est atteint. Par exemple dans le cas d'une couche magnéto-résistive CM5, en Permalloy, la cale d'épaisseur 25 peut être formée à partir d'une couche en carbone adamantin, ou en silice, ou encore en nitrure de silicium ; cette couche étant déposée par exemple juste après avoir la photolithogravure des conducteurs de liaison. Il est à noter que la cale 25 peut aussi être constituée par une couche plane présentant une surface plus grande que celle des matériaux à polir.

Les différentes opérations ci- dessus mentionnées sont montrées en référence à un unique capteur pour simplifier la description, mais bien entendu elles sont menées simultanément pour tous les capteurs M1 à Mn.

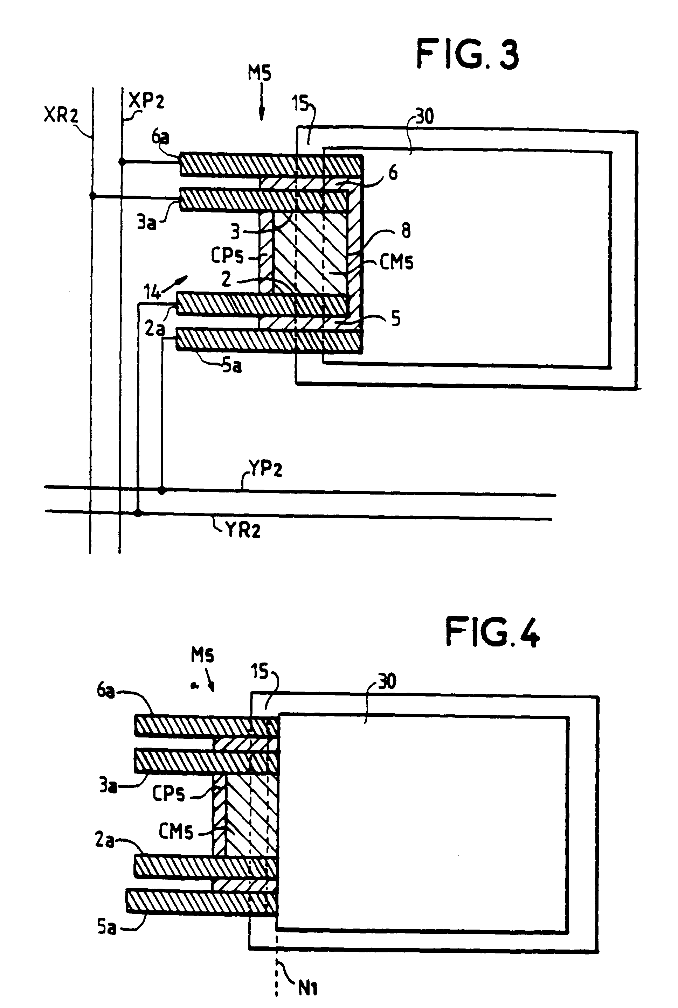

La figure 3 est une vue de dessus qui permet de situer différents éléments du capteur M5 avant la phase de polissage. La couche magnéto-résistive CM5 apparaît au dessus de la couche de polarisation CP5, cette dernière ayant une superficie plus grande. La couche magnéto-résistive CM5 et la couche de polarisation CP5 sont sensiblement centrées au dessus de la zone inclinée 15, et débordent dans le creux 14 (sensiblement plan) et vers la surface haute 30. Sur la figure 3, la zone inclinée 15 apparaît entre deux rectangles dont l'un plus petit représente la surface haute 30, et l'autre représente le bas de la zone inclinée 15 là ou elle rejoint la surface en creux 14.

Les deux conducteurs de liaison 2a, 3a sont reliés aux extrémités 2, 3 opposées de la couche magnéto-résistive CM5 ; et les deux conducteurs de liaison 5a, 6a sont reliés aux extrémités 5, 6 de la couche de polarisation CP5. D'autre part ces conducteurs de liaison sont reliées aux conducteurs lignes et colonnes YR2, XR2 et YP2, XP2 correspondants, comme montré à la figure 1.

La réalisation des conducteurs lignes et colonnes YR1 à YR3, XR1 à XR3 et YP1 à YP3, XP1 à XP3 n'est pas expliquée car elle est en elle -même tout à fait classique et simple, par les méthodes conventionnelles en microlithographie notamment

La figure 4 est une vue de dessus semblable à la figure 3, et montre le capteur M5 après l'opération de polissage. Pour simplifier la figure, les conducteurs lignes et colonnes ne sont pas représentés.

Après le polissage, le bord 8 de la couche magnéto-résistive est au niveau N1 qui correspond au bord de la surface haute 30 ; la couche magnéto-résistive a alors sa dimension définitive

La méthode qui vient d'être expliquée peut aussi bien s'appliquer à des capteurs magnéto-résistifs d'un type différent ; par exemple sans couche de polarisation parcourue par un courant, ou avec une couche antiferromagnétique, etc ... L'important est que les couches magnéto-résistives des capteurs soient réalisées, au moins partiellement, dans un plan non parallèle à la face du substrat qui porte les capteurs, afin de rendre accessibles au polissage, simultanément, la tranche de toutes les couches magnéto-résistives.

La possibilité de polir tous les capteurs sans les séparer en barrettes, est particulièrement intéressante dans le cas des dispositifs matriciels formant par exemple une tête de lecture matricielle ou tête multipistes comme montrée à la figure 1, car elle évite d'avoir à assembler les différentes barrettes après polissage ; les différents capteurs magnéto-résistifs peuvent directement être réalisés sur le substrat, au pas désiré pour le fonctionnement. Le procédé de l'invention est donc particulièrement avantageux à utiliser pour la fabrication de têtes magnétiques de lecture multipistes.

L'acquisition des signaux délivrés par les différents capteurs magnéto-résistifs peut s'effectuer de différentes manières, mais plus le nombre de ces capteurs est grand, et plus il est intéressant d'effectuer cette acquisition par un adressage de type matriciel.

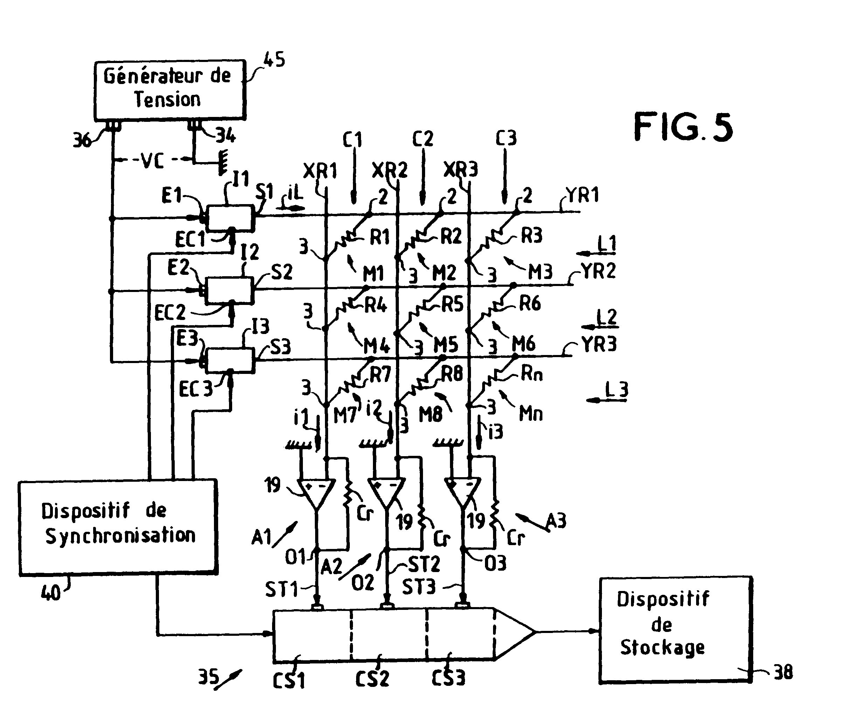

La figure 5 illustre schématiquement une méthode d'adressage matriciel susceptible d'être appliquée au dispositif magnétique 1 montré à la figure 1 ; cette méthode est déjà décrite dans une demande de brevet français n° 90 09302 au nom de la demanderesse.

Les capteurs magnéto-résistifs M1 à Mn de la figure 1 comportent chacun une couche de polarisation CP1 à CPn et une couche magnéto-résistive CM1 à CMn.

Ces couches de polarisation peuvent être parcourues par un courant de polarisation de façon permanente, de telle sorte qu'elles ne jouent aucun rôle dans l'adressage ; aussi pour simplifier la figure 5, on n'a pas représenté ces couches de polarisation ni les conducteurs de polarisation YP1 à YP3 et XP1 à XP3. D'autre part, les couches magnéto-résistives CM1 à CMn constituent des résistances dont la valeur varie avec les variations du champ magnétique à mesurer, et en conséquence c'est sous la forme de résistances R1 à Rn que sont représentés les capteurs M1 à Mn.

Chaque résistance R1 à Rn est reliée par une première extrémité 2 à un conducteur ligne YR1 à YR3, et par sa seconde extrémité 3 à un conducteur colonne XR1 à XR3.

Un générateur de tension 45 produit une tension continue de commande VC destinée à être appliquée aux bornes de résistances R1 à Rn. Chaque conducteur ligne YR1 à YR3 reçoit l'une des polarités de la tension de commande VC par l'intermédiaire d'un organe de commutation I1, I2, I3. Chaque organe de commutation peut être mis soit à l'état "bloqué soit à l'état "passant" : dans l'état "bloqué", l'organe de commutation I1 à I3 présente une très grande impédance, et dans l'état "passant" il présente une très faible impédance.

Le générateur de tension 45 délivre les deux polarités de la tension de commande VC par deux sorties 34, 36 dont la première est reliée à une tension de référence telle que la masse par exemple ; la seconde sortie 36 délivrant la seconde polarité est reliée à une entrée E1 à E3 de tous les organes de commutation I1 à I3

Les sorties S1, S2, S3 des organes de commutation I1, I2, I3 sont reliées chacune à un conducteur ligne YR1, YR2, YR3.

Les organes de commutation I1 à I3 remplissent une fonction d'interrupteur, ils ouvrent ou ferment le circuit entre la seconde polarité de la tension de commande VC et chacun des conducteurs lignes Y1 à Y3. Ces organes de commutation peut être constitués par différents composants en eux-mêmes classiques, par exemple les contacts d'un relais électromécanique ; mais pour des questions de vitesse de commutation, il peut être plus avantageux d'utiliser des portes électroniques, de type analogique par exemple (transistors MOS) qui peuvent présenter des états "passant" ou "bloqué" compatibles avec ceux qui sont nécessaires dans la présente application, avec des transitions rapides.

Avec une telle disposition, on active ligne par ligne L1, L2, L3 les capteurs M1 à Mn sélectionnés, en appliquant la tension de commande VC uniquement aux résistances R1 à R9 correspondantes, en commandant l'état "passant" de l'organe de commutation I1 à I3 correspondant. A cet effet, une entrée de commande Ec1 à Ec3 de chacun des organes de commutation est reliée à un dispositif de commande et de synchronisation 40 en lui-même classique ; ce dernier délivre par exemple un signal de commande vers l'organe de commutation à rendre "passant", et en l'absence d'un tel signal chaque organe de commutation conserve l'état "bloqué".

En outre, d'une part tous les conducteurs colonnes XR1, XR2, XR3 sont portés en permanence au potentiel de la tension de référence, c'est-à-dire à la masse dans l'exemple présent, ce potentiel correspondant à la première polarité de la tension de commande VC ; et d'autre part tous les conducteurs colonnes sont reliés chacun en permanence à un capteur de courant A1, A2, A3.

Dans l'exemple non limitatif, les capteurs de courant sont montés en série entre chaque conducteur colonne XR1 à XR3 et la première polarité de la tension de commande. En conséquence ces capteurs de courant A1 à A3 sont constitués chacun par un amplificateur 19 du type amplificateur opérationnel par exemple, suivant un montage classique qui permet, avec un amplificateur ayant un gain suffisant, d'obtenir une impédance d'entrée quasiment nulle. Dans l'exemple non limitatif décrit, chaque amplificateur 19 comporte une entrée positive +, une entrée négative - ; et une sortie O1, O2, O3, avec une résistance de contre -réaction Cr connectée entre l'entrée négative - et la sortie O1 à O3. Chaque conducteur colonne XR1 à XR3 est relié à une entrée négative - d'un amplificateur 19. Chaque entrée positive + d'amplificateur est reliée au potentiel de la masse, de telle manière que ce potentiel est reporté sur chaque conducteur colonne XR1 à XR3 à travers une très faible impédance. Les sorties O1 à O3 des amplicateurs 19 délivrent un signal en tension dont l'amplitude est fonction du courant qui circule dans les conducteurs colonnes XR1 à XR3.

Dans cette configuration, l'adressage d'une ligne L1 à L3 de capteurs sélectionnés s'effectue en commandant la mise à l'état "passant" de l'organe de commutation I1 à I3 correspondant. La tension de commande est alors appliquée aux résistances R1 à Rn de cette ligne sélectionnée, d'où résulte, d'une part dans le conducteur ligne YR1 à YR3 correspondant un courant ligne iL qui est la somme des courants dans toutes les résistances R1 à Rn de cette ligne ; et d'où résulte d'autre part dans chaque conducteur colonne XR1 à XR3, un courant il à i3 propre à chaque résistance R1 à Rn, c'est-à-dire à chacun des capteurs M1 à Mn qui forment la ligne L1 à L3 adressée. Ainsi par exemple, si la ligne adressée est la première ligne L1 : le courant i1 qui circule dans le premier conducteur colonne XR1 correspond au courant du premier capteur M1 ; les courants i2 et i3 qui circulent respectivement dans le second et le troisième conducteur colonne XR2 et XR3 correspondent respectivement au second et au troisième capteurs M2, M3. Quand c'est le second organe de commutation 12 qui est "passant" les autres organes I1, I3 sont "bloqués", et les courants i1, i2 et i3 correspondent respectivement aux quatrième, cinquième et sixième capteurs M4, M5, M6 ; et ces courants sont ceux qui proviennent des septième, huitième et neuvième capteurs M7, M8, M9 quand le troisième organe de commutation I3 est rendu "passant".

La tension de commande VC étant appliquée à travers une faible impédance au conducteur ligne Y1 à Y3 de la ligne L1 à L3 sélectionnée, alors que les autres conducteurs lignes des lignes non sélectionnées sont en série avec une très haute impédance, les résistances R1 à Rn des capteurs non sélectionnés n'ont en pratique aucune influence sur le courant i1 à i3 qui circule dans les conducteurs colonnes XR1 à XR3 et qui est injecté dans les amplificateurs 19.

Les courants i1 à i3 sont convertis en signaux de tension ST1 à ST3 par les amplificateurs 19, et ces signaux de tension sont chargés d'une manière en elle-même classique, dans un registre d'acquisition 35. Le registre d'acquisition 35 est un registre à décalage par exemple, comportant des cases de stockage CS1 à CS3 capables de stocker chacune une valeur analogique. Le registre d'acquisition 35 comporte autant de case de stockage CS1 à CS3 qu'il y a de conducteurs colonne XR1 à XR3, et chaque sortie O1 à O3 d'amplificateur est reliée à une telle case de stockage.

Les chargements des signaux de tension ST1 à ST3 sont accomplis simultanément pour toute une ligne L1 à L3, et entre chaque chargement dans le registre d'acquisition 35, les données contenues dans ce dernier peuvent être transférées dans un dispositif de stockage 38, sous la commande du dispositif de commande et de synchronisation 40. Il est ainsi possible d'adresser les capteurs M1 à Mn ligne par ligne L1 à L3, et notamment de façon cyclique, à une vites se qui est liée à la dimension des informations inscrites sur une bande magnétique à lire et à la vitesse de déplacement de cette bande.

Il est bien entendu possible d'utiliser de nombreuses autres méthodes, toutes connues du spécialiste, pour réaliser l'acquisition des signaux de tension ST1 à ST3 délivrés par les amplificateurs A1 à A3 : par exemple les sorties d'amplificateurs peuvent être reliées à des dispositifs d'acquisition (non représenté) indépendants les uns des autres.

## Revendications

1. Procédé de fabrication d'une pluralité de capteurs magnéto-résistifs (M1 à Mn), consistant à déposer sur une face (12) d'un substrat (11) au moins une couche d'un matériau magnéto-résistif, puis à réaliser dans cette couche de matériau magnéto-résistif une pluralité d'éléments magnéto-résistifs (CM1 à CMn) correspondant chacun à un capteur, caractérisé en ce qu'avant le dépôt de la couche de matériau magnéto-résistif, et à l'emplacement de chaque capteur (M1 à Mn), il consiste à réaliser dans ladite face (12) du substrat (11) une zone (15) de surface inclinée par rapport au plan général de ladite face (12) du substrat, afin que chaque élément (CM1 à CMn) magnéto-résistif soit formé au moins partiellement sur une telle surface inclinée et présente un bord (8) orienté vers l'extérieur du substrat, en ce que pour chaque capteur on réalise au moins une cale (25) d'épaisseur, la cale d'épaisseur étant formée à proximité de la zone (15) de surface inclinée de manière à affleurer un niveau (N1) à atteindre dans une phase de polissage, afin de réduire la vitesse à laquelle s'effectue le polissage quand ce niveau (N1) est atteint, et en ce qu'une opération de polissage, permettant d'ajuster la longueur des éléments magnéto-résisitifs, est effectuée dans un plan parallèle à la dite face du substrat pour tous les éléments magnéto-résistifs formés sur le substrat.

2. Procédé selon la revendication 1, caractérisé en ce qu'il consiste à réaliser les zones de surface inclinée (15) par photogravure.

3. Procédé selon l'une des revendications précédentes, caractérisé en ce qu'il consiste en outre à réaliser une couche de polarisation (CP1 à CPn) sur chaque zone (15) de surface inclinée.

4. Procédé selon l'une des revendications précédentes, caractérisé en ce que le substrat (11) est un substrat monocristallin.

5. Procédé selon l'une des revendications précédentes, caractérisé en ce que le substrat (11) est en silicium monocristallin.

6. Procédé selon l'une quelconque des revendications 4 ou 5, caractérisé en ce que pour former les zones (15) de surface inclinée, la photogravure consiste en une gravure anisotrope révélant les plans cristallins du substrat (11).

7. Procédé selon l'une des revendications 1 à 4, caractérisé en ce que les zones (15) de surface inclinée sont obtenues par apport de matière sur le substrat (11).

8. Dispositif magnétique comportant une pluralité de capteurs (M1 à Mn) magnéto-résistifs obtenus par le procédé suivant l'une des revendications 1 à 7, les capteurs étant portés par un même substrat (11), chaque capteur (M1 à Nn) comportant un élément magnéto-résistif (CM1 à CMn), caractérisé en ce que les éléments magnéto-résistifs (CM1 à CMn) sont au moins partiellement dans des plans inclinés (15) par rapport à une face (12) du substrat, et en ce qu'à chaque capteur est associé au moins une cale d'épaisseur (25), la cale d'épaisseur étant formée à proximité de la zone de surface inclinée et ayant une surface supérieure à une hauteur correspondant à un plan de polissage superficiel des éléments magnétorésistifs.

## Claims

1. Method for fabricating a plurality of magnetoresistive sensors (M1 to Mn), consisting in depositing at least one layer of a magnetoresistive material onto a face (12) of a substrate (11), and in then making within this layer of magnetoresistive material a plurality of magnetoresistive elements (CM1 to CMn) each corresponding to a sensor, characterized in that before depositing the layer of magnetoresistive material, and at the location of each sensor (M1 to Mn), it consists in making within the said face (12) of the substrate (11) a surface zone (15) which is inclined with respect to the general plane of the said face (12) of the substrate, so that each magnetoresistive element (CM1 to CMn) is formed at least partially on such an inclined surface and exhibits an edge (8) oriented outwards from the substrate, in that for each sensor at least one shim (25) is made, the shim being formed in proximity to the inclined surface zone (15) in such a way as to be flush with a level (N1) to be reached in a polishing phase, so as to reduce the speed at which the polishing is performed when this level (N1) is reached, and in that a polishing operation, making it possible to adjust the length of the magnetoresistive elements, is performed in a plane parallel to the said face of the substrate for all the magnetoresistive elements formed on the substrate.

2. Method according to Claim 1, characterized in that it consists in making the inclined surface zones (15) by photoengraving.

3. Method according to one of the preceding claims, characterized in that it furthermore consists in making a polarization layer (CP1 to CPn) on each inclined surface zone (15).

4. Method according to one of the preceding claims, characterized in that the substrate (11) is a monocrystalline substrate.

5. Method according to one of the preceding claims, characterized in that the substrate (11) is made of monocrystalline silicon.

6. Method according to either one of Claims 4 or 5, characterized in that in order to form the inclined surface zones (15), the photoengraving consists of an anisotropic engraving revealing the crystalline planes of the substrate (11).

7. Method according to one of Claims 1 to 4, characterized in that the inclined surface zones (15) are obtained by adding material to the substrate (11).

8. Magnetic device including a plurality of magnetoresistive sensors (M1 to Mn) obtained by the method according to one of Claims 1 to 7, the sensors being carried by one and the same substrate (11), each sensor (M1 to Mn) including a magnetoresistive elements (CM2 to CMn), characterized in that the magnetoresistive elements (CM1 to CMn) are at least partially within planes (15) which are inclined with respect to a face (12) of the substrate, and in that at least one shim (25) is associated with each sensor, the shim being formed in proximity to the inclined surface zone and having a surface above a height corresponding to a plane of surface polishing of the magnetoresistive elements.

## Patentansprüche

1. Verfahren zur Herstellung einer Vielzahl von magnetoresistiven Sensoren (M1 bis Mn), das darin besteht, auf einer Fläche (12) eines Substrats (11) wenigstens eine Schicht aus einem magnetoresistiven Material aufzubringen, dann in dieser Schicht aus magnetoresistivem Material eine Vielzahl von magnetoresistiven Elementen (CM1 bis CMn) herzustellen, die jeweils einem Sensor entsprechen, dadurch gekennzeichnet, daß es vor dem Aufbringen der Schicht aus magnetoresistivem Material und am Ort jedes Sensors (M1 bis Mn) darin besteht, in der Fläche (12) des Substrats (11) eine zur allgemeinen Ebene der Fläche (12) des Substrats geneigte Oberflächenzone (15) herzustellen, damit jedes magnetoresistive Element (CM1 bis CMn) wenigstens teilweise auf einer solchen geneigten Oberfläche gebildet ist und einen Rand (8) aufweist, der von dem Substrat nach außerhalb orientiert ist, daß für jeden Sensor wenigstens ein Unterlegstück (25) hergestellt ist, das in der Nähe der geneigten Oberflächenzone (15) derart gebildet ist, daß es bündig an einem Niveau (N1) anliegt, das in einer Polierphase zu erreichen ist, um die Geschwindigkeit zu verringern, mit der der Poliervorgang durchgeführt wird, wenn dieses Niveau (N1) erreicht ist, und daß eine Polieroperation, die die Einstellung der Länge der magnetoresistiven Elemente ermöglicht, in einer zu der Seite des Substrats parallelen Ebene für alle auf dem Substrat gebildeten magnetoresistiven Elemente durchgeführt wird.

2. Verfahren nach Anspruch 1, dadurch gekennzeichnet, daß es darin besteht, die geneigten Oberflächenzonen (15) durch Photoätzung herzustellen.

3. Verfahren nach einem der vorhergehenden Ansprüche, dadurch gekennzeichnet, daß es ferner darin besteht, an jeder geneigten Oberflächenzone (15) eine Polarisationszone (CP1 bis CPn) herzustellen.

4. Verfahren nach einem der vorhergehenden Ansprüche, dadurch gekennzeichnet, daß das Substrat (11) ein monokristallines Substrat ist.

5. Verfahren nach einem der vorhergehenden Ansprüche, dadurch gekennzeichnet, daß das Substrat (11) aus monokristallinem Silicium besteht.

6. Verfahren nach einem der Ansprüche 4 und 5, dadurch gekennzeichnet, daß die Photoätzung zur Bildung der geneigten Oberflächenzonen (15) aus einer anisotropen Ätzung besteht, die die kristallinen Ebenen des Substrats (11) freilegt.

7. Verfahren nach einem des Ansprüche 1 bis 4, dadurch gekennzeichnet, daß die geneigten Oberflächenzonen (15) durch Zufuhr von Material auf das Substrat (11) erhalten werden.

8. Magnetische Vorrichtung mit einer Vielzahl von magnetoresistiven Sensoren (Ml bis Mn), die durch das Verfahren nach einem der Ansprüche 1 bis 7 erhalten wurden, wobei die Sensoren von ein und demselben Substrat (11) gehalten werden, wobei jeder Sensor (M1 bis Mn) ein magnetoresistives Element (CM1 bis CMn) aufweist, dadurch gekennzeichnet, daß die magnetoresistiven Elemente (CM1 bis CMn) wenigstens teilweise in zu einer Fläche (12) des Substrats geneigten Ebenen (15) liegen, und daß jedem Sensor wenigstens ein Unterlegstück (25) zugeordnet ist, wobei das Unterlegstück in der Nähe der geneigten Oberflächenzone gebildet ist und eine Oberfläche mit einer Höhe aufweist, die einer Oberflächenpolierebene der magnetoresistiven Elemente entspricht.
